# EUROPEAN PATENT APPLICATION

(11) **EP 3 029 950 A1**
(43) Date of publication of application: **08.06.2016**
(21) Application number: 14196054.2
(22) Date of filing: 03.12.2014
(51) Int. Cl.: H04N 21/482

(54) **System and method for graphical user interface mosaic**

(71) Applicant: Advanced Digital Broadcast S.A., 1292 Geneva (CH)
(72) Inventor: Lipczynski, Jacek, 65-119 Zielona Gora (PL); Szaj, Adam, 65-119 Zielona Gora (PL)
(74) Representative: Blonski, Pawel

(57) **Abstract**

A method for operating a graphical user interface mosaic comprising at least one tile associated with content data accessible by a television signal receiver, the method being characterized in that it comprises the steps of: defining a mosaic layout comprising at least one externally predefined tile associated with content data and at least one user defined tile associated with content data; accepting at least one request, from the user, to define a spatial arrangement of the least one user defined tile associated with content data as well as association of the least one user defined tile with available content data; accepting at least one request, from the user, to define a direct access input command to at least one of the user defined tiles for directly invoking playback of the content data associated with the respective tile; accepting a request to generate the mosaic according to the defined parameters; generating a video signal comprising the graphical user interface mosaic; accepting a request to select one of the mosaic tiles; outputting the content data signal associated with the selected mosaic tile.

## Description

The present invention relates to a system and method for graphical user interface mosaic. In particular the present invention relates to a highly configurable, multi-content mosaic.

Prior art defines US 5633683 A entitled "Arrangement and method for transmitting and receiving mosaic video signals including sub-pictures for easy selection of a program to be viewed" discloses a "Channel Navigation System", which allows a user to get an overview of the digital programs provided, and to easily select a desired program. The method includes the transmission (in a separate program of a transport stream) of a video stream representing a mosaic picture, the sub-pictures of which are miniature versions of the video stream of other programs in that transport stream. The method further includes the transmission of information, which links the position of each sub-picture within the mosaic picture with the program number from which the sub-picture is derived. The user selects a desired program by merely 'pointing and clicking' its miniature version in the mosaic picture.

Another know publication US 5434624 A entitled "Apparatus for producing a multi-scene video signal" discloses a multi-scene video signal producing apparatus in which a single large capacity memory is used for simultaneously displaying a plurality of scenes on respective regions formed by splitting one frame without requiring a plurality of memories for individual video signals so that the apparatus can be constituted by a small number of required component parts. The apparatus includes, in a stage preceding the memory into which a plurality of digital video input signals are written, data delay parts delaying the video input signals, data position detectors generating data position pulses together with address signals, address delay parts delaying the address signals, a memory synchronization pulse generator generating memory synchronization pulses, position detection/holders detecting and holding the data positions on the basis of the data position pulses and the memory synchronization pulses, decoders decoding the output signals of the position detection/holders, and selectors selecting the delayed video signals and the delayed address signals according to signal decoded information from the decoders, so that the plural video input signals can be written in the single memory.

It would be advantageous to improve configuration options of a mosaic as well as obviate the need to reserve additional channel bandwidth for the mosaic channel with respect to the aforementioned prior art.

The aim of the development of the present invention is an improved and bandwidth effective system and method for graphical user interface mosaic.

### SUMMARY AND OBJECTS OF THE PRESENT INVENTION

An object of the present invention is a method for operating a graphical user interface mosaic comprising at least one tile associated with content data accessible by a television signal receiver, the method further comprising the steps of: defining a mosaic layout comprising at least one externally predefined tile associated with content data and at least one user defined tile associated with content data; accepting at least one request, from the user, to define a spatial arrangement of the least one user defined tile associated with content data as well as association of the least one user defined tile with available content data; accepting at least one request, from the user, to define a direct access input command to at least one of the user defined tiles for directly invoking playback of the content data associated with the respective tile; accepting a request to generate the mosaic according to the defined parameters; generating a video signal comprising the graphical user interface mosaic; accepting a request to select one of the mosaic tiles; outputting the content data signal associated with the selected mosaic tile.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

These and other objects of the invention presented herein, are accomplished by providing a system and method for graphical user interface mosaic. Further details and features of the present invention, its nature and various advantages will become more apparent from the following detailed description of the preferred embodiments shown in a drawing, in which:
Fig. 1 presents a diagram of the system according to the present invention;
Fig. 2 presents an exemplary mosaic graphical user interface screen according to the present invention;
Fig. 3 presents an RCU used for mosaic navigation;
Fig. 4 presents compact mosaic configuration screen;
Fig. 5 and Fig. 6 present a compact mosaic arrangement;
Fig. 7 presents a detailed configuration screen for the mosaic;
Fig. 8A and 8B present a process of displaying a channel mosaic according to the present invention; and
Fig. 9 presents a process of accessing content mosaic.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

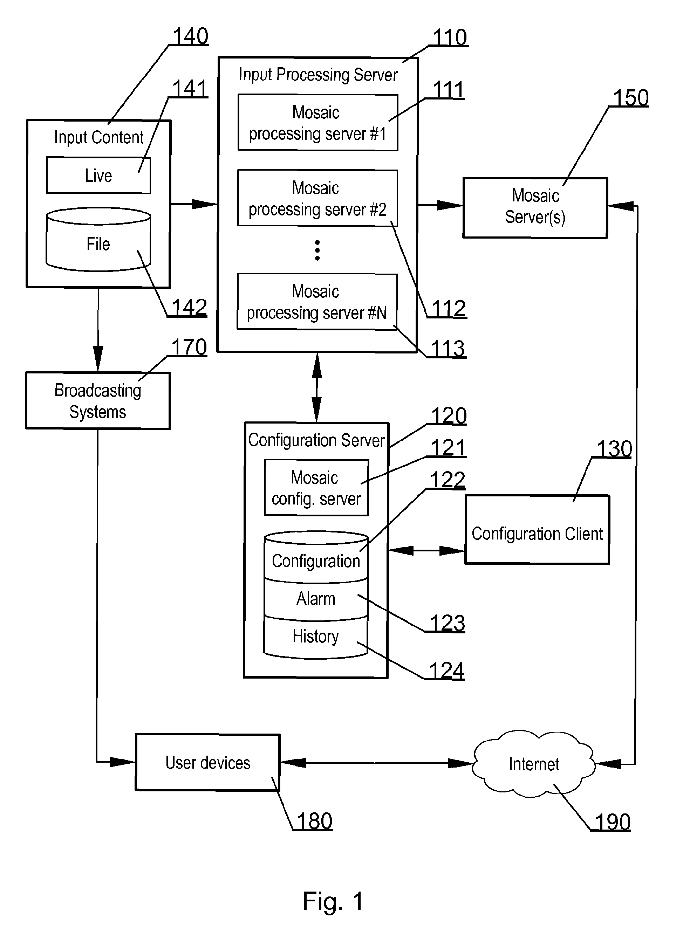

Fig. 1 presents a diagram of the system according to the present invention. The main component of the system is an input processing server 110. This component is dedicated to physical processing of input data. Each server is uniquely identified by its network address. The process server itself consists of a certain number of core processes performing conversions of assigned input data into the relevant output data based on specified rules. All the processes are supervised by an agent that is also responsible for communication with a configuration server 120 component.

The input processing server 110 may process two common types of input data 140: live data 141 and stored data 142 (typically files like pictures, music etc.) and may generate output data such as the mosaic data to a mosaic server 150.

The input processing server 110 may be physically organized as one or more sub-servers 111-113. Each of such sub-servers is responsible for generating an input for a given mosaic arrangement.

The network and server configuration including the specification of maximum number of core processes is preferably executed once during the system installation based on benchmark data relating to given hardware setup.

There may be two parameters specifying maximum number of core processes for each of live data streams and file streams that are not received live.

The system further comprises a configuration server 120. The role of this component is to store a system configuration 122 obtained from a configuration client 130 console. A part of the configuration deals only with the configuration server 120. Some of the configuration requests sent from the configuration server 120 are also transferred automatically to the input processing server 110.

The configuration server 120 may comprise an alarm module 123. Its function is to gather information about abnormal events from the input processing server 110 and store them in a local database 124. The alarm history can be then browsed by an operator. The alarms may be reported asynchronously by each mosaic processing server 111-113.

The configuration server 120 may comprise a monitor component. The aim of this feature is to detect potential problems in the system components and automatically rearrange the actual system configuration with applying fail over procedure. An appropriate alarm should also be raised to inform operator about the problem. The fail procedure typically selects a spare mosaic processing server and assigns to it the configuration that has been previously assigned to a failed mosaic processing server. The fail procedure must additionally turn off the failed mosaic processing server 111-113.

A mosaic server 150 encapsulates data obtained from the input processing server 110 and sends the data to receivers 180, for example via the Internet 190 or other broadcasting media.

The user devices 180 may also receive the original live streams 141 that are also an input to mosaic processing. These streams may be received via the same or other broadcasting channels 170.

The system may be realized using dedicated components or custom made FPGA or ASIC circuits. A memory, of the configuration server, may store computer program or programs executed by the server in order to execute steps of the method according to the present invention.

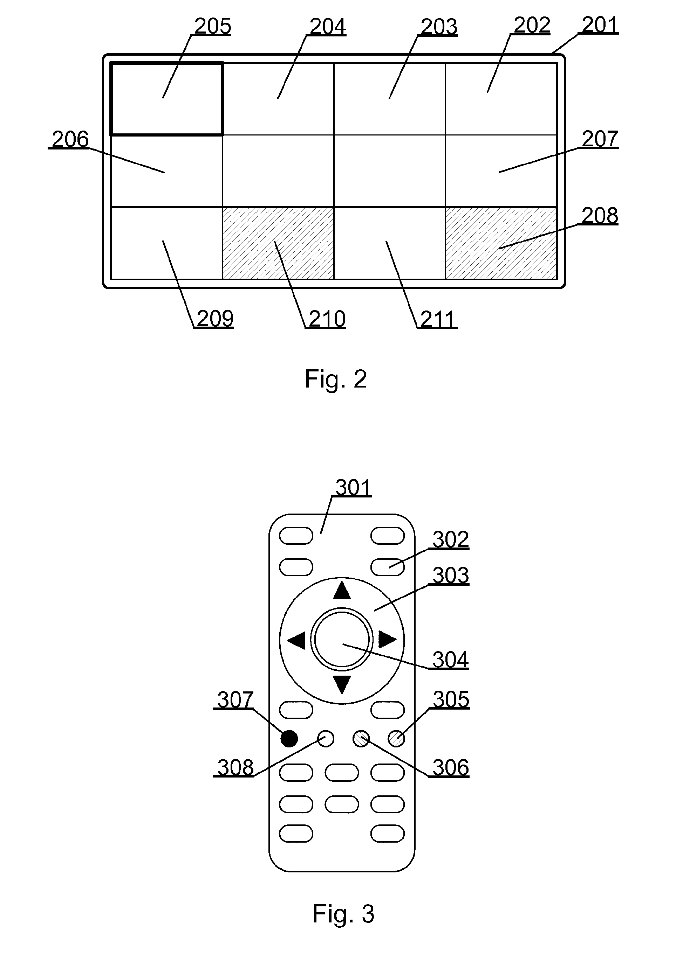

Fig. 2 presents an exemplary mosaic graphical user interface screen according to the present invention.

The Mosaic application software generates a scene 201, to be displayed on a display screen, as a set of rectangular panes 202-211, as shown in Fig. 2. The number of tiles in horizontal and vertical dimension is a parameter of the application.

Assignment of channels to particular tiles 202-211 may be chosen individually by each subscriber. However, some of the tiles may be reserved for advertisements or other content fixed by a television operator. The location of the advertisement pictures on the video is preferably configured only by an operator, the content provider.

One of the tiles may be distinguished with a color frame indicating the current position of a cursor 205. A subscriber can move the cursor to any position except the panes reserved by operator for advertisements 208, 210. The cursor can be moved horizontally or vertically.

The tile indicated by the cursor preferably plays a stream of a live channel, which is associated with it. The other tiles may be played or refreshed periodically in order to display only picture snapshots from the associated channels. Changing cursor position causes the mosaic application to stop playing back the live channel in the current tile and start playing back the stream associated with the destination tile. The picture snapshots are being refreshed periodically again. The refresh period is a parameter of the application and depends on the number of front-ends of the subscriber's device.

The mosaic GUI screen may be operated with a remote control unit as shown in Fig. 3. The RCU may 301 may comprise directional keys 303 and an OK key 304 for approving user's selections. Further, the RCU 301 may comprise four dedicated buttons 305-308 that may be distinguished from each other by different colors.

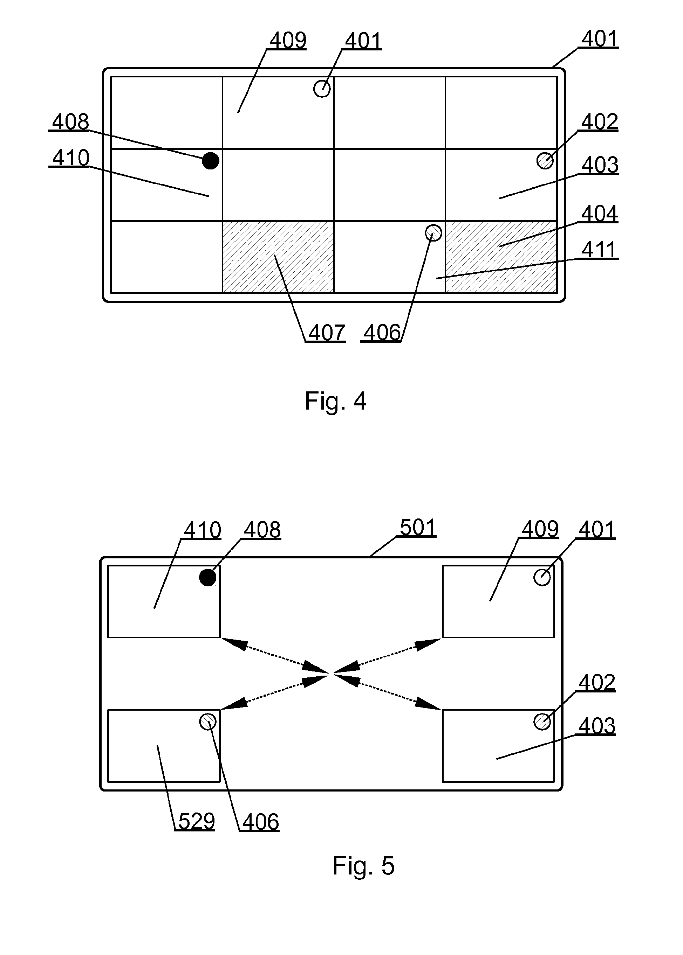

These buttons may be useful in an embodiment of the mosaic shown in Fig. 4. The mosaic application allows a subscriber to select up to 4 tiles in a special way and mark them by respective color buttons of the RCU.

In order to mark a given tile for fast channel access, the subscriber must use arrow buttons first to position the cursor on the selected tile. Then one of the color buttons must be pressed to mark 401, 402, 406, 408 a given tile 403, 409, 410. The same procedure must be applied in order to remove the selection.

When the mosaic includes marked channels it may be displayed in a reduced form for quick access to content as shown in Fig. 5. The four selected channels 403, 409, 410, 411 are displayed, in this arrangement, in the four corners of the screen so that a main , full screen channel may also be presented to the viewer while the mosaic preview is accessed.

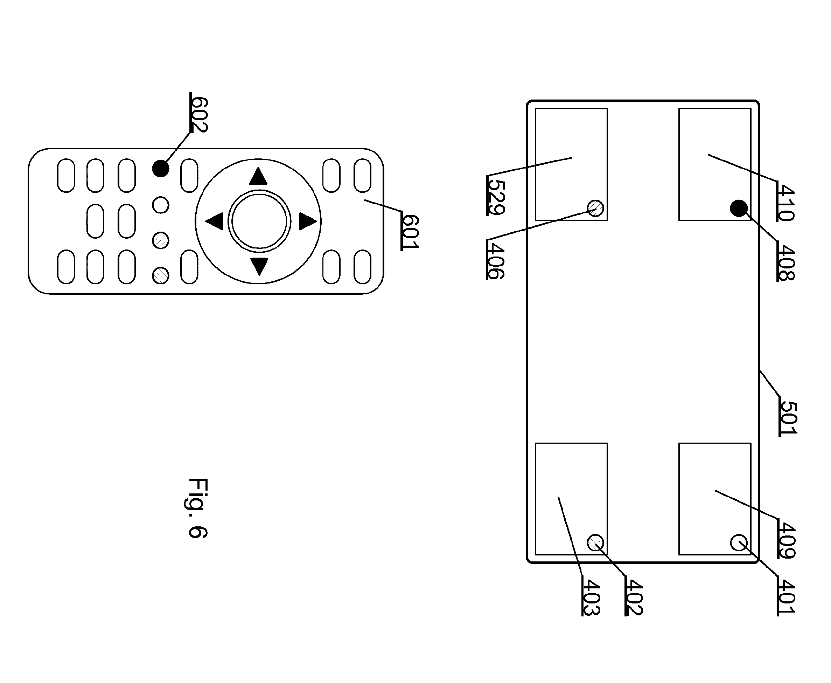

When a viewer depresses a color key 602 of the RCU 602, as shown in Fig. 6, the 410 channel will be refreshed live and or switched full screen.

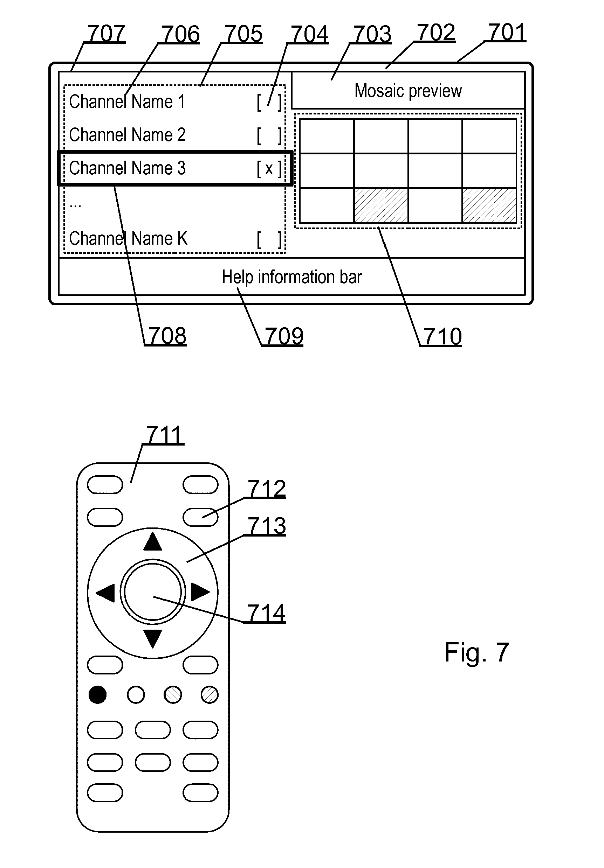

Fig. 7 presents a detailed configuration screen for the mosaic. Initially, the mosaic application contains only a framework of default tiles. The framework defines number of panels located horizontally and vertically as well as which ones are reserved for advertisements.

In order to fill the framework with content, a subscriber must assign the selected channel sources to the mosaic tiles. When the mosaic application displays the framework, the subscriber can invoke the dialog window, in which the assignment of channels and specific tiles can be established based on individual preferences.

The subscriber may choose favorite live channels from a channel list 705. The list of available live channels may be fetched from a server together with the mosaic framework. The channel list that can be used by the mosaic application may differ from the channel list available for reception by the subscriber's receiver.

A channel association window 701 consists of two panels. The left panel contains the list of channels available via the mosaic functionality. The right panel contains the reduced size 710 display of the mosaic framework indicating, which tiles are reserved for advertisements and which ones are available for the subscriber.

The channels assignment procedure consists of two steps. In the first step, the subscriber chooses a channel name and presses OK 714 button on the RCU 711. This action toggles the focus from the channel list to the image of the mosaic. In the second step, the subscriber chooses a tile, which will be associated with a selected live channel. Having pressed OK button 714, the subscriber accepts the association. The focus returns to the channel list. The cursor may always be positioned at the first tile not associated with any live channel.

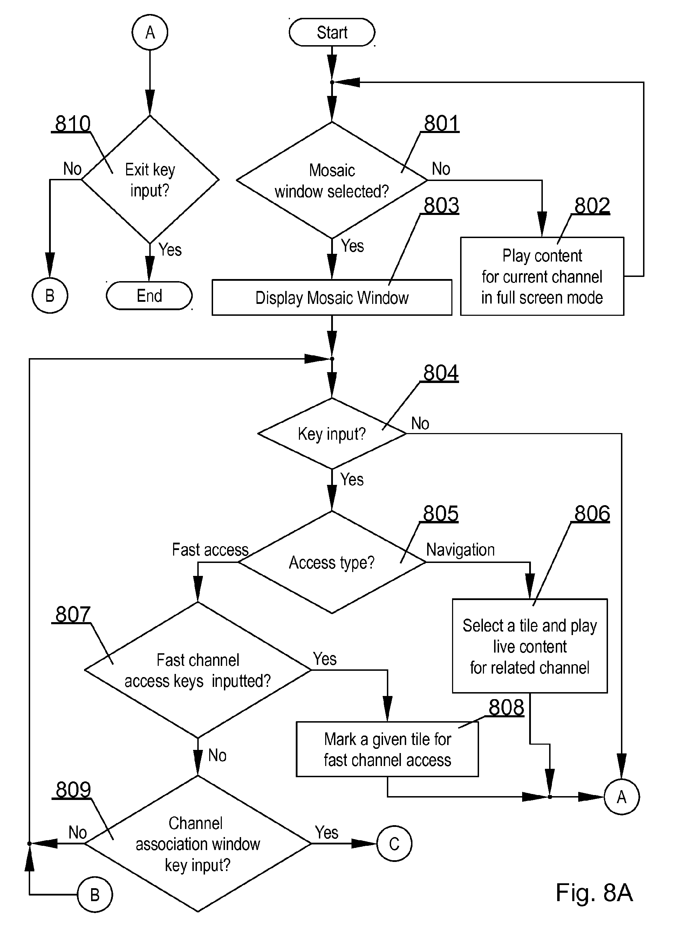

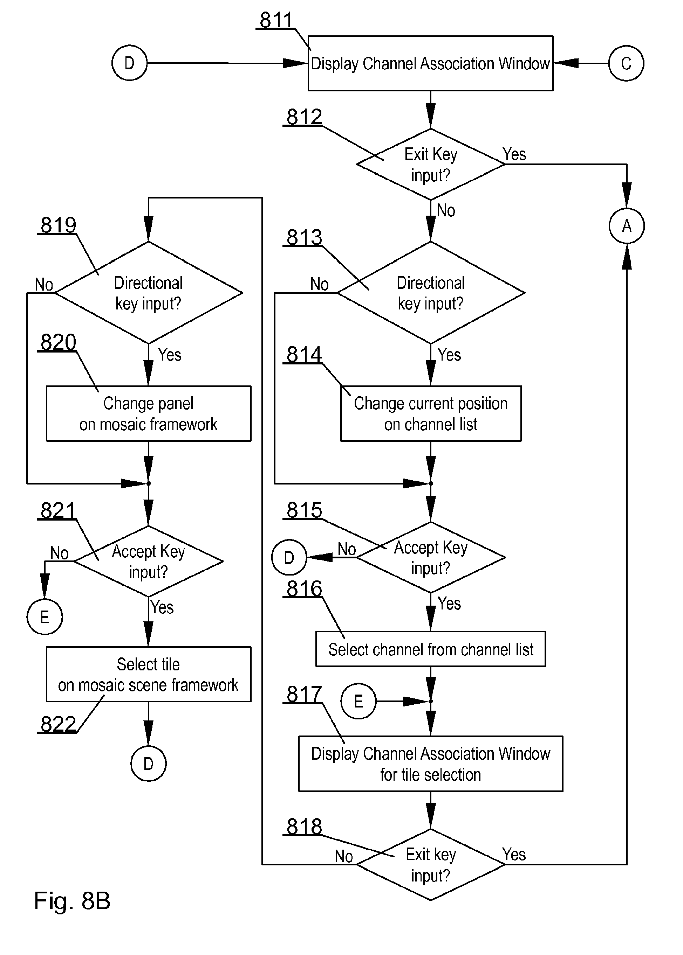

Fig. 8A and 8B present a process of displaying a channel mosaic according to the present invention. The process starts at step 801 from awaiting selection the mosaic function, preferably with an RCU. In case the assigned RCU key is not pressed 802, the process operates in a loop.

When invoked, at step 803, the mosaic window is displayed according to user's configuration as shown in Fig. 2. Next, when user enters navigational options 804 with the RCU, the system determines whether a reduced size mosaic is to be presented 805 (as shown in Fig. 6) or the user wishes to navigate among a full screen mosaic as shown in Fig. 2.

In case of a full screen mosaic, the tiles are refreshed as frequently as possible depending on the front ends capabilities of the receiver. Preferably, the selected channel's tile is always played live 806.

In case of a reduced mosaic 807 the system awaits for a selection of one of the fast access keys 808 or a key associated with invoking a configuration of the mosaic 809.

When the configuration window is invoked and displayed 811, the system awaits for the user to input a directional key 813 so that current cursor position may be changed appropriately 814 in order to select a channel from the channel list 816 (705 in Fig. 7). When the channel has been selected, at step 817 there may be displayed a channel association window for mosaic tile selection 820, 822 (710 in Fig. 7). When the mosaic tile has been configured, the arrangement is saved as appropriate configuration data in a computer-readable memory.

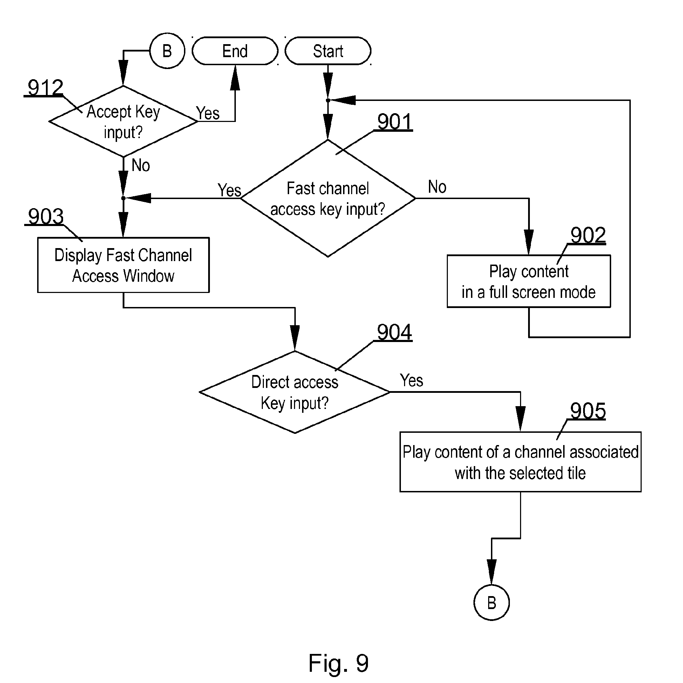

Fig. 9 presents a process of accessing content mosaic. At step 901 it is verified whether a fast channel access key has been input. Next, in case it has, at step 903 there is displayed a fast channel access arrangement as shown in Fig. 6. When a viewer presses one of direct access keys 904 a corresponding channel will be displayed full screen 905.

The present invention provides for easy and useful access to television content that is more intuitive and quicker. Therefore, the invention provides a useful, concrete and tangible result.

Embodiments of the invention have been presented in relation to a television head-end as well as a television signal receiver where specific data processing methods are applied. Thus, the machine or transformation test is fulfilled and that the idea is not abstract.

It can be easily recognized, by one skilled in the art, that the aforementioned method for graphical user interface mosaic may be performed and/or controlled by one or more computer programs. Such computer programs are typically executed by utilizing the computing resources in a computing device. Applications are stored on a non-transitory medium. An example of a non-transitory medium is a nonvolatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for operating a graphical user interface mosaic comprising at least one tile associated with content data accessible by a television signal receiver, the method being **characterized in that** it comprises the steps of:
• defining a mosaic layout comprising at least one externally predefined tile associated with content data and at least one user defined tile associated with content data;
• accepting at least one request, from the user, to define a spatial arrangement of the least one user defined tile associated with content data as well as association of the least one user defined tile with available content data;
• accepting at least one request, from the user, to define a direct access input command to at least one of the user defined tiles for directly invoking playback of the content data associated with the respective tile;
• accepting a request to generate the mosaic according to the defined parameters;
• generating a video signal comprising the graphical user interface mosaic;
• accepting a request to select one of the mosaic tiles;
• outputting the content data signal associated with the selected mosaic tile.

2. The method according to claim 1 **characterized in that** the direct access input command is a key press of one of keys of a remote control unit.

3. The method according to claim 1 **characterized in that** the content data is audio data or video data or audio-video data.

4. The method according to claim 1 **characterized in that** mosaic comprises four tiles in proximity to respective corners of frames of the generated video signal comprising the graphical user interface mosaic.

5. The method according to claim 1 **characterized in that** at least one externally predefined tile associated with content data presents advertisements.

6. A computer program comprising program code means for performing all the steps of the computer-implemented method according to claim 1 when said program is run on a computer.

7. A computer readable medium storing computer-executable instructions performing all the steps of the computer-implemented method according to claim 1 when executed on a computer.
